# EUROPÄISCHE PATENTSCHRIFT

(11) **EP 1 683 139 B1**
(45) Veröffentlichungstag und Bekanntmachung des Hinweises auf die Patenterteilung: **03.12.2008**
(21) Anmeldenummer: 04790930.4
(22) Anmeldetag: 27.10.2004
(51) Int. Cl.: G11B 7/013, G11B 7/007

(54) **HYBRIDER OPTISCHER DATENTRÄGER MIT MODIFIZIERTER CD-SCHICHT**
HYBRID OPTICAL DATA CARRIER HAVING A MODIFIED CD LAYER
SUPPORT DE DONNEES OPTIQUE HYBRIDE A COUCHE CD MODIFIEE

(30) Priorität: 03.11.2003 DE 10351166
(43) Veröffentlichungstag der Anmeldung: 26.07.2006
(73) Patentinhaber: Schreiber, Stefan, 95326 Kulmbach (DE)
(72) Erfinder: Schreiber, Stefan, 95326 Kulmbach (DE)
(74) Vertreter: Dendorfer, Claus
(86) Internationale Anmeldenummer: PCT/EP2004/012157
(87) Internationale Veröffentlichungsnummer: WO 2005/043517

(56) Entgegenhaltungen:
- WO-A-98/38637
- WO-A-02/086880
- US-A- 6 009 072

## Beschreibung

Es sind immer wieder Versuche unternommen worden, eine Compact Disc mit neueren Datenformaten bzw. Datenmedien auf Kombinationsplatten (hybride Datenträger) zu vereinigen, die Daten in mindestens zwei Formaten enthalten.

Speziell bei neueren hochauflösenden Musikformaten wie Super Audio CD (SACD) und DVD-Audio wird die Kompatibilität zur Compact Disc mittels hybrider Medien angestrebt, da die vorhandene Gerätebasis für die Reproduktion von CDs wesentlich größer ist als die vergleichsweise noch geringe Zahl von DVD-Audio- oder SACD-Spielern. Die Rückwärtskompatibilität zur CD-Audio könnte dabei die Einführung neuer hochauflösender Musikformate wesentlich erleichtern, die neben ihrer gegenüber der Compact Disc (CD-Audio) höheren Wiedergabequalität auch gänzlich neue Eigenschaften wie Mehrkanalton, Musikvideo, Texte und die Musik untermalendene Fotos bzw. Standbilder bieten, daher funktional und qualitativ als der Compact Disc überlegen angesehen werden müssen.

Unabhängig von neuen Audioformaten wie SACD und DVD-Audio ist es sehr attraktiv, eine CD um Musikvideo und Mehrkanalton (z.B. im Format "Dolby Digital"/ AC3) zu erweitern, indem eine DVD/CD-Hybridplatte hergestellt wird, wobei es sich meistens um eine Vereinigung der Format CD-Audio und DVD-Video handelt. Evt1. kann auch auf der "DVD" (weiteres) Bonusmaterial vorhanden sein, etwa Biographien, die von einem DVD-Spieler wiedergegeben werden könnten, oder computerlesbare Informationen im Format DVD-ROM. Dies wird mit dem kommerziell vorhandenen Format "DVDplus" angestrebt. (Es wird darauf hingewiesen, dass sich in der Literatur alternative Schreibweisen wie DVDPlus oder DVD-plus finden.)

Versuche, Mehrkanalton und Musikvideo auf einer Compact Disc selbst zu kodieren, existieren bereits, da sowohl mit "Video CD" ein Standard für die Kodierung von Mpeg-1-Video auf einer CD existiert, als auch CDs mit Mehrkanalkodierungen wie DTS kommerziell erhältlich sind. Es steht außer Frage, dass DVD-Video wesentlich fortgeschrittenere Möglichkeiten für Musikvideo und Mehrkanalton bietet, als es bei einer CD jemals der Fall sein kann. Denn es ist offensichtlich, dass die Datenkapazität einer DVD die Kapazität einer CD weit übertrifft. Wegen des hohen Platzbedarf für Video und Mehrkanalton können Vorschläge, die auf der Compact Disc basieren, daher im Allgemeinen nicht überzeugen.

Bei der Super Audio CD gibt es eine hybride Fassung (SACD/CD), die sowohl zu SACDals auch konventionellen CD-Spielern kompatibel ist. Es existieren bei dieser Form zwei Datenschichten:
1. Eine hochauflösende SACD-Schicht in ca. 0,6mm Schichttiefe, die teilreflexiv für einen roten Laser mit einer Wellenlänge von ca. 650nm ist, aber sehr transparent für einen Laser mit einer Wellenlänge von ca. 780nm, wie er für einen CD-Spieler charakteristisch ist.
2. Die konventionelle CD-Schicht in ca. 1,2mm Schichttiefe, gesehen von der auszulesenden Plattenseite.

Hybride SACD/CD-Medien sind kompatibel zu fast allen CD-Reproduktoren, aber nicht zu allen DVD-Spielern, die teilweise weder eine "CD" noch eine "SACD" erkennen, sondern eine aus ihrer Sicht nicht normgerechte oder "beschädigte" DVD-Schicht und anschließend den Lesevorgang abbrechen, bzw. die Platte nicht initialisieren können.

Wie bekannt, wurde eine einseitig ausgelesene hybride DVD/CD bisher nicht definiert, obwohl für den Standard DVD-Audio eine derartige hybride Variante im Gespräch war. In der heutigen Situation lässt sich eine derartige Kombinationsplatte nicht leicht im nachhinein einführen, da viele der vorhandenen DVD-Spieler bzw. DVD-ROM-Laufwerke entweder nur eine "CD" erkennen würden, obwohl sie vielmehr eine "DVD" reproduzieren sollten, oder sogar wegen der teilreflektiven DVD-Schicht den Lesevorgang abbrechen würden. Denn die Reflektivität einer für infraroten Laser weitgehend durchlässigen DVD-Schicht liegt für einen roten Laser (Wellenlänge ca. 650nm) bei ca. 20% , dies ist klar außerhalb der Spezifikationen einer einschichtigen DVD, deren Reflektivitätswert laut Standard zwischen 45% bis 85% liegen sollte. Allerdings entspricht der Reflektionswert von ca. 20% den Reflektionswerten der Datenschichten einer zweischichtigen DVD.

Der Lesevorgang einer derartigen einseitig ausgelesenen hybriden DVD (V/A)/ CD bei einem DVD-Spieler erfolgt daher entweder erfolgreich, er kann wegen der nicht eingehaltenen Spezifikation, v.a. der zu geringen Reflektivität, abgebrochen werden, oder es wird eine "CD" erkannt, obwohl der DVD-Spieler bei DVD-Fähigkeit eine "DVD" reproduzieren sollte. Daher verhält sich eine derartige hybride und einseitig gelesene DVD/CD bei DVD-Spielern sehr unvorhersehbar, wie es mittlerweile auch praktisch in Feldstudien bestätigt wurde.

Seit 1999 wurde versucht, im Markt eine zweiseitige DVD-CD zu etablieren. Es mag an der fehlenden Unterstützung für diese Variante liegen, dass diese "DVDplus" bisher nicht den zweifellos möglichen kommerziellen Erfolg einer CD-DVD-Kombinationsplatte geerntet hat.

Diese fehlende Unterstützung von Firmen wird aber mindestens zum Teil dadurch bedingt, dass es sich um einen Datenträger handelt, der stets gegen bestimmte CD- oder DVD-Spezifikationen verstößt. Denn eine derartige DVDplus fällt in der Regel dicker aus als die im CD- oder DVD-Standard maximal erlaubten 1,5mm (bezogen auf die Gesamtdicke eines Datenträgers), wenn eine DVD-Halbplatte mit einer CD verklebt wird. Falls dies ohne weitere Anpassungen erfolgt, ist diese Variante ca. 0,6mm + 1,2mm = 1,8mm dick. Es ist möglich, die CD-Seite auf 1,1mm auszudünnen, da ein CD-Substrat laut den Standarddefmitionen von Sony und Philips ("Red Book" etc.) zwischen 1,1mm und 1,3mm dick sein darf. Der Wert 1,2mm ist lediglich ein Durchschnittswert. Falls das CD-Substrat in den erlaubten 1,1mm hergestellt wird, ist eine DVDplus folglich ca. 1,7mm dick.

Diese Variante wird kommerziell genutzt, auch wenn es wegen den Standardverletzungen von einigen Lizenzgebern eher "toleriert" als "offiziell erlaubt" wird. In der Praxis ist die Kompatibilität zu gegenwärtig im Markt vorhandenen DVD-Spielern recht hoch. Probleme treten auf, wenn die CD-Seite von Abspielgeräten mit relativ geringen Dickentoleranzen gelesen wird, speziell bei portablen CD-Spielern ("Discman"), CD-Spielern im Auto, sowie auch tragbaren Computern.

Falls man z.B. die CD-Schicht weiter verdünnt, nähert man sich zwar der erlaubten Gesamtdicke einer CD bzw. DVD von 1,5mm an, in diesem Fall liegt allerdings die CD-Substratdicke ausserhalb den offiziell erlaubten Werten für eine Compact Disc. Abspielgeräte haben dann zwar evtl. weniger Probleme mit der Plattendicke, jedoch treten dann eher Schwierigkeiten bei der Datenwiedergabe und der korrekten Fokusierung auf. Ein spezifisches Problem liegt z.B. darin, dass ein CD-Spieler bereits bei der Fokusierung durch ein CD-Substrat eine wegen des Lichtwegs durch ein optisch dichteres Medium als Luft (Polykarbonat) entstehende sogenannte "sphärische Aberration" einplant, und in der Linse entsprechend korrigiert.

Falls die Schichtdicke der CD zu sehr ausgedünnt wird, führt dies zu einer Überkorrektur der nun "zu geringen" sphärischen Aberration im optischen System, was zu einem Abbildungsfehler führt. Für die CD-Optik entsteht ein Effekt, der sehr ähnlich einer mangelhaften Fokusierung ist, bzw. verliert die Abbildungsqualität bei der Wiedergabe der CD-Datenstrukturen deutlich an Schärfe. Die Pits und Lands, mit denen die Informationen auf der CD-Datenschicht kodiert werden, werden also von der Leseoptik schlechter erkannt, bzw. wird es bei zunehmend abnehmender Dicke eines CD-Substrats zunehmend zu Lesefehlern kommen. Unter Umständen können die Daten überhaupt nicht mehr gelesen werden.

Die erste konkrete Patentanmeldung zu einer DVD-CD ist wahrscheinlich die WO-98/38637, in der eine CD "halber Höhe" mit einer DVD-Halbplatte verklebt wird. Die Idee war vermutlich, eine DVD-CD in der üblichen Dicke von 1,2mm zu beschreiben, deren Gesamtdicke folglich keine Probleme bereitet. Jedoch wurde diese Idee vor der Anmeldung vermutlich nicht ausprobiert, denn eine CD halber Höhe ist wohl nur in den seltensten Fällen von einem CD-Spieler reproduzierbar. Dieser müsste einen sehr großen Fokusierungsbereich aufweisen, um auf eine laut CD-Standard "zu nahe" Datenschicht zu fokusieren. Selbst wenn ein Lesegerät das könnte, bleibt das Problem der "fehlerhaften" oder zu geringen sphärischen Aberration bestehen. Falls auf eine zukünftige technische Lösung für das Problem der variierten sphärischen Aberrartion gehofft worden ist, so ist dies in der genannten Patentapplikation zumindest nicht erwähnt worden.

US-Patent 6,009,072 offenbart, dass bei einer 12-cm-CD nach üblichen Spezifitrationen eine kürzeste Pitlänge (3T-Länge) einer EFM-Demodulation umgefähr 0,97 Mikrometer betragen kann.

Die Erfindung ist durch, Anspruch 1 definiert. Die abhängigen Ansprüche betreffen optionale Merkmale einiger Ausführungsbeispiele der Erfindung.

Im Folgenden wird teilweise detailliert auf physikalische Spezifikationen der Compact Disc und DVD eingegangen, wobei es aber zu einem besseren Verständnis hilfreich wäre, eine vollständige Darstellung physikalischer CD-Spezifikationen zu kennen, obwohl es nicht zwingend erforderlich ist. Da bei gängigen Darstellungen des CD-Standards hin und wieder Fehler oder Vereinfachungen auftreten, wird hier beispielsweise auf die Dokumente der European Computer Manufacturers Association (ECMA) vergewiesen, in denen diese Spezifikationen genau und ausreichend detailliert beschrieben worden sind. Diese Standarddefinitionen sind öffentlich zugänglich.

Bei der Compact Disc wird auf den Standard ECMA-130 verwiesen: "Data Interchange on read only 120mm optical discs (CD-ROM)". Die physikalischen Spezifikationen bei CD-Audio sind identisch, da das Format CD-ROM hinsichtlich der physikalischen Spezifikationen komplett auf der ursprünglichen CD-Audio-Spezifikation aufbaut. (Selbstverständlich handelt es sich bei der CD-ROM um ein anderes Format als CD-Audio.)

Informationen zu physikalischen Spezifikationen der DVD, insbesondere zu Festlegungen hinsichtlich Substratdicke und Brechungsindex des zu verwendenden Materials, finden sich in den Standards ECMA-267 bzw. ECMA-268.

Im Wesentlichen gibt es heute drei Formen einer DVD-CD, die kommerziell bekanntlich meistens unter dem Namen "DVDplus" vertrieben werden. Am gebräuchlichsten ist gegenwärtig die Variante in ca. 1,7mm Dicke, bei der die beiden CD- und DVD-Teilplatten in der jeweils erlaubten minimalen Substratdicke miteinander verklebt werden, wobei die Datenschichten gegenüberliegen, aber natürlich nicht von der gleichen Seite gelesen werden, da sie optisch getrennt sind.

Ferner gibt es DVD-CD Varianten in einer Gesamtdicke von weniger oder gleich 1,5mm, entsprechend der von den CD- und DVD-Standards vorgegebenen Gesamtdicke von 1,5mm einer (einzelnen) Compact Disc oder DVD. Sofern bei diesen Formen lediglich die CD-Seite modifiziert bzw. ausgedünnt wurde, hat dies einen lizenztechnischen Vorteil. Die Platte kann nämlich als "DVD" bezeichnet werden, da die DVD-Seite den einschlägigen DVD-Spezifikationen genügt.

Da die CD-Audio Patente demnächst ablaufen, kann daher eine derartige DVD/CD-A ohne Einwilligung der entsprechenden Rechtehalter hergestellt werden, da sie eine ("legale") DVD mit einem Format kombiniert, das vielleicht nicht "Compact Disc" genannt werden darf, aber auch nicht "verboten" werden kann. Obwohl diese Platte rechtlich relativ wenig Probleme aufwirft, beispielsweise kann sie nicht von den DVD-Rechtehaltern verboten werden, ist sie als "CD" evtl. nicht kompatibel genug.

Eine dritte Variante wäre eine DVD-plus in einer Dicke zwischen 1,5mm und 1,7mm also eine Kompromisslösung zwischen Dickenproblemen und CD-Lesbarkeit. Es kann generell nicht nur die CD-Schicht verdünnt werden, es lässt sich in geringem Maße auch die Dicke des DVD-Teilsubstrats verringern, z.B. auf 0,55mm. Allerdings ist bei der einschichtigen DVD-5 laut Standarddefmition das erlaubte Minimum exakt 0,570mm, das wegen der generell geringen möglichen Abweichungstoleranzen bei DVDs ganz sicher nicht stark unterschritten werden darf.

Mit Sicherheit lässt sich die Klebeschicht zwischen den DVD- und CD-Substraten gegenüber den üblichen Werten verringern (normalerweise ca. 60µm), denn diese ist laut DVD-Standard bei den zweiseitig gelesenen Fassungen wie DVD-10 und DVD-18 nicht in einer spezifischen Dicke definiert. (Allerdings folgt sie teilweise aus anderen DVD-Spezifikationen, z.B. ist sie durch die Gesamtdicke einer DVD nach oben begrenzt.) Wenn die Klebeschicht auf beispielsweise zehn Mikrometer vermindert werden kann, wird eine DVD-CD gegenüber dem Fall von 60 Mikrometer um immerhin 0,05mm dünner. Da das Ziel im Idealfall darin besteht, eine DVD-plus von ca. 1,7mm auf höchstens 1,5mm auszudünnen, eine Differenz von 0,2mm, sollte diese Möglichkeit nicht vernachlässigt werden.

Falls bei einer DVD-plus zwei DVD-Schichten vorhanden sind (DVD-9/CD), müssen diese allerdings durch eine transparente Schicht von mindestens 40 Mikrometer getrennt werden, wie in den DVD-Spezifikationen festgelegt. Falls die transparente Trenn- und Klebeschicht zu dünn wäre, könnte die Leseoptik die zwei Schichten eventuell nicht in ausreichender Qualität trennen, bzw. würden sich beim Lesen die zwei Datenschichten optisch beeinflussen. Ein optischer Übersprecheffekt (engl. "Crosstalk") soll durch einen ausreichenden Schichtabstand möglichst ausgeschlossen werden.

Im zweischichtigen Fall darf allerdings die erste DVD-Schicht sich von der auszulesenden Oberfläche gesehen in 0,55mm Tiefe befinden, wodurch das gesamte DVD-Substrat mindestens 0,59mm dick wird. Es bleibt zu beachten, dass in diesem Falle die Längen der Datenstrukturen (Pits und Lands) um 10% vergrößert werden.

Neuere Versuche haben zur Herstellung einer DVDplus in 1,48mm geführt, die allerdings bisher bei weitem nicht auf allen Reproduktoren läuft. Ebenso gibt es Versuche mit DVD-CD Hybriden in 1,55mm und 1,6mm Dicke.

Die bisher gängigste Form in ca. 1,7mm funktioniert sehr gut, wenn ein sie lesender CD-Spieler (bzw. natürlich auch DVD-Spieler) die leicht erhöhte Dicke toleriert. Dies muß nicht der Fall sein, insofern ist die Suche nach dünneren Ausführungen geboten und verständlich. Es ist fraglich, ob die bisherigen Versuche zu besseren Resultaten und höherer Kompatibilität als die bereits kommerziell angebotene Fassung in ca. 1,7mm führen, dies wird immer in konkreten Tests bewiesen werden müssen.

Bei der Verringerung eines CD-Substrats ist es hilfreich, die auszulesenden Informationsmuster (Pits und Lands) sehr präzise bzw. mit sehr guten optischen Leseeigenschaften herzustellen. Da eine Verringerung eines CD-Substrats wegen den damit verbundenen optischen Änderungen (besonders Abweichung der sphärischen Aberration) selbst zu einer Verschlechterung des Lesesignals führt, sollte bei der Plattenherstellung darauf geachtet werden, dass im Endprodukt saubere Pit- und LandStrukturen vorliegen, und geringe Schwankungen bezüglich der idealen Länge dieser Strukturen auftreten ("Jitter"), die das Lesen des Signals weiter erschweren würden, bzw. die Signalqualität verschlechtern würden. Klare optische Strukturen und ein geringer Medienjitter führt zu einer guten Signalqualität und zu leichterer Lesbarkeit für Leseoptik und -elektronik.

Selbst wenn das CD-Teilsubstrat einer DVDplus mit geringem Jitter und klar definierten lesbaren Strukturen hergestellt wird, was beides zusammen zu einem guten Lesesignal führt, sind beim Ausdünnen der CD-Seite irgendwann Grenzen erreicht, bei deren Unterschreitung Daten nicht mehr zuverlässig reproduziert werden können.

In der vorliegenden Erfindung wird vorgeschlagen, die ausgelesenen Informationsmuster (Pits und Lands) einer CD-Schicht innerhalb eines hybriden Datenträgers zu vergrößern, was diese speziell bei auftretender sphärischer Aberration leichter erkennbar macht und das Lesesignal generell verbessert. Es wird angestrebt, den laut CD- und anderen Standards für optische Datenträger maximal erlaubten 1,5mm Gesamtdicke sich zumindest anzunähern, bzw. diesen Wert vielleicht sogar zu erreichen oder zu unterschreiten, ohne die Kompatibilität eines derartigen hybriden Datenträgers zu vorhandenen CD- und beispielsweise DVD-Spielern zu sehr einzuschränken.

Die Vergrößerung bezieht sich dabei mindestens auf eine Verlängerung der Datenstrukturen einer CD-Schicht (Pits und Lands), unter Umständen kann dies mit einer Verbreiterung dieser lesbaren Strukturen kombiniert werden, sofern vorteilhaft.

Obwohl die Vergrößerung bzw. Verlängerung von Pit- und Landstrukturen zu einer Verminderung der Abspieldauer führt, kann dieser Effekt durch die gleichzeitig erfolgende Verringerung der Spurbreite einer erfindungsgemäßen CD-Schicht ausgeglichen werden, denn letztere Maßnahme führt wiederum zu einer Verlängerung der Spieldauer. Der Begriff Spieldauer bezieht sich hier auf eine CD-Audio, wobei aber eine DVDplus keineswegs nur sich auf eine Kombination einer DVD und CD-Audio beziehen muss, vielmehr ist jedes CD-Format möglich, wie bei einer DVDplus auch jedes DVD-Format möglich ist. Man kann allgemein auch sagen, dass die Kapazität einer CD durch Verringerung der Spurbreite erhöht wird, denn der Begriff Kapazität ist beispielsweise bei einer CD-ROM angemessener als "Spieldauer", wie er bei einer CD-Audio oder auch Video-CD angemessen ist.

Es wird in diesem Zusammenhang vermutet, dass eine erfindungsgemäße hybride DVD-CD vorteilhaft mit einer Verringerung des refraktiven Indexes des verwendeten Plattenmaterials kombiniert werden kann. Für einige CD-Spieler wäre eine CD-Schicht in ca. 0,9mm Entfernung von der Plattenoberfläche gesehen optisch zu nah, anders ausgedrückt liegt dieser Wert ausserhalb oder zu sehr am Rand des Fokusbereichs eines Linsensystems. Ohne dass hierauf näher eingegangen werden muss, führt die Verringerung des refraktiven Indexes für das optische System eines Lesegeräts zu einer scheinbaren Verlängerung der Substratdicke. Denn das Substrat ist selbst Teil eines optischen Systems. Wenn ein CD-Substrat in 1,2mm Dicke beispielsweise einen refraktiven Index von 1,5 aufweist, dann "sieht" die Optik eines Wiedergabegeräts wegen des erfolgenden Brechungseffekts eine Datenschicht in "0,8mm" Tiefe. Eine Verringerung des refraktiven Indexes führt daher für die Leseoptik bzw. dem Linsensystem zu einer Verlängerung der effektiv gesehenen Schichttiefe, daher kann die Verminderung der Substratdicke vielleicht durch andere Plattenmaterialien mit niedrigerem Brechungsindex als bei Polykarbonat ausgeglichen werden, bzw. kann es sich auch um chemisch variierte Polykarbonat-Varianten handeln.

Dabei gibt es allerdings Grenzen, da bei niedrigerem Brechungsindex gleichzeitig die (im System eingeplante) sphärische Aberration vermindert wird. Dies müsste durch Materialien mit höherem Brechungsindex ausgeglichen werden, es handelt sich also um einen gegenläufigen Effekt, was lediglich praktische Erfahrungen bestätigt, dass sich dünnere DVD-CD Varianten nicht allein durch Einsatz neuer Plattenmaterialien herstellen lassen.

Es wird, da es die eigentliche Erfindung betrifft, auf die im CD-Standards festgelegten physikalischen Normen für Pitstrukturen eingegangen, da von diesen bewusst abgewichen wird.

Ein CD-Lesegerät muss speziell für Audioreproduktion eine bestimmte Datenmenge pro Sekunde lesen, damit zwei Audiokanäle, die bekanntlich in PCM 44,1kHz/16 Bit kodiert sind, neben weiteren Hilfsinformationen wiedergegeben werden können. Es muss also eine bestimmte Datenrate eingehalten werden. Neben der eigentlichen Nutz- oder Nettodatenrate ist es klar, dass für Fehlerkorrektur eine gewisse Menge an Zusatzdaten wie sogenannte Produktcodes erforderlich sind, damit Lesefehler mathematisch korrigiert werden können,

Hinsichtlich der Lesegeschwindigkeit ist bekannt, dass z.B. CD-ROM-Laufwerke die von CD-Audio bekannte Grundgeschwindigkeit vervielfachen können, da eine hohe Datenrate bei Lesen und Schreiben im Computerbereich wünschenwert ist. In der Literatur wird die Geschwindigkeit der ursprünglichen CD-Definitionen als "einfache Geschwindigkeit" bezeichnet, während bei CD-ROM Laufwerken heute Geschwindigkeiten bis zum 48-fachen dieser Datenrate und sogar mehr durchaus üblich sind.

Bei dem Standard CD-Audio ist die Datenrate exakt vorgegeben, nicht aber die Längen der Pit- und Landstrukturen, bzw. die linearen Lesegeschwindigkeiten, bzw. die daraus folgenden Umdrehungsgeschwindigkeiten eines Laufwerks, die alle innerhalb eines gewissen Bereichs flexibel sein können.

Wie bekannt werden die Daten einer CD mit Hilfe der sogenannten "Eight to Fourteen"-Modulation kodiert, die wegen dreier Verbindungsbits nach jedem Datenwort jedoch auch als 8:17-Modulation angesehen werden kann. Allgemein gesehen handelt es sich um eine RLL(2,10)-Modulation. RLL-Modulationen brauchen in diesem Zusammenhang nicht erklärt zu werden, sie sind bei magnetischer und optischer Speicherung allgemein üblich. Eine "1" versinnbildlicht bei dieser Form der Modulation einen magnetischen Flußwechsel, bzw. auch einen optischen Wechsel (Pit --> Land, Land -->Pit). Da zwischen den Wechseln bei einer RLL(2,10)-Modulation mindestens zwei und höchstens zehn Nullen auftreten, ist die minimale Länge eines Pits oder Lands 3T, die maximale Länge 11T.

Der Dichteratio DR der EFM-Modulation ist bekanntermassen 24/17, ca. 1,41. Man kodiert also in den kleinsten erkennbaren Einheiten 1,41 Bits, nicht z.B. nur 1 Bit, was zu einer höheren Kapazität und Geschwindigkeit gegenüber weniger effektiven Verfahren führt. Zum Vergleich ist die neuere EFMPlus-Modulation der DVD ebenfalls ein RLL(2,10)-Verfahren, mit einem Dichteratio von 1,5.

Neuere Kodierungsmethoden wie PRML halten seit einiger Zeit auch bei optischen Medien Einzug, auf sie wird hier jedoch nicht eingegangen.

Die kleinste Pitlänge (und Landlänge) 3T dürfen laut üblichen und grundlegenden CD-Spezifikationen wie CD-Audio und CD-ROM zwischen 0,833 und 0.972 µm betragen, die grösste Längen beträgt bei 11T ca. 3,054 µm bis 3,564µm (maximale Werte gerundet). Wegen der vorgegebenen Datenrate entspricht diesen Werten eine direkt proportionale Umdrehungsgeschwindigkeit der CD, von der wiederum die lineare Lesegeschwindigkeit zwischen Lesekopf und Datenmedium abhängt. Bei der höchsten Datendichte (3T = 0,833µm) ist die lineare Lesegeschwindigkeit zwischen Kopf und Medium 1,2m/s, bei der geringsten Datendichte auf dem Medium (3T ca. 0,972µm) entspricht diese 1,4m/s.

Diese flexiblen Spezifikationen erklären sich dadurch, dass man bei der Definition des CD-Audio Standards bewusst die Herstellung von CDs erleichtern wollte, denn Platten mit größeren Strukturen lassen sich leichter produzieren, bzw. haben auch geringeren Jitter. In der Praxis wird der Wert 1,4m/s mit den längsten Pitstrukturen (geringste Datendichte) bei der Herstellung von Platten heute nicht mehr verwendet, da sich diese auch bei der höchsten Kapazität in hoher Qualität herstellen lassen, und lediglich die nutzbare Spieldauer der Platte verringert würde. Daher wird heute überwiegend der Wert 3T = 0,833 Mikrometer, bzw. eine lineare Geschwindigkeit von 1,2m/s verwendet. Eine Geschwindigkeit von 1,3m/s (und entsprechend 3T ca. 0,9025 Mikrometer, der Mittelwert aus obigen Werten) ist jedoch insofern relevant, da er im CD-Standard als Mittelwert gesehen werden kann, von der nach oben oder unten abgewichen werden darf. Eine Abweichung nach oben ist allerdings nicht üblich. Speziell bei einer CD-ROM wird wegen der damit höheren Kapazität so gut wie immer mit den minimalen Pitlängen gearbeitet, nur so wird eine Kapazität der CD-ROM von ca. 650Mbyte erreicht.

Bei hybriden Platten mit einer CD-Schicht wurde eine entsprechende Abweichung (größere Pitstrukturen entsprechend einer linearen Geschwindigkeit von mehr als 1,3m/s) bisher nie eingesetzt, sie wird hier als eine "optische Hilfe" speziell beim Lesen eines dünner als üblichen CD-Substrats vorgeschlagen.

Der zweite relevante Faktor hinsichtlich lesbarer physikalischer Strukturen einer CD-Datenschicht ist der Spurabstand. Dieser ist laut CD-Standards 1,6µm +- 0,1µm. Definiert wird daher ein Bereich von 1,5µm bis 1,7µm.

Im Gegensatz zu oben wird bei gepressten CD-Audio- und CD-ROM-Platten meistens der Mittelwert von 1,6 Mikrometer verwendet, gerade nicht der minimale Wert. Dies mag damit zusammenhängen, dass dieser Wert sich eher auf die Servos und das "Tracking" eines CD-Spielers bezieht, während Probleme bei der CD-Herstellung generell gelöst worden sind.

Beispiele mit 1,7 Mikrometer kommen, zumindest so weit mir bekannt, nicht in der Praxis vor. Jedoch werden oft 1,5 Mikrometer verwendet, der minimale Wert für den Spurabstand.

Bei einer linearen Geschwindigkeit von 1,2m/s und einer Spurbreite von 1,5 Mikrometer wird die maximal erlaubte Spieldauer einer CD-Audio, bzw. generell die laut Standard erlaubte maximale Kapazität erreicht, letzteres ist für die Standards CD-ROM und CD-R besonders relevant.

Bei CD-Audio kann man Spurbreiten von 1,6 - 1,5 Mikrometer dann einsetzen, wenn die Spieldauer einer CD länger als ca. 75-76 Minuten sein soll. Das theoretische Maximum bezüglich der Spieldauer ist dann -bei gleichzeitig verwendeten minimalen Pitlängen- ca. 80 Minuten. Exakte Spieldauern können deswegen nicht angegeben werden, da sich der Lead-Out einer Compact Disc teilweise noch für Daten (hier Musik) nutzen lässt, wenn man von den Vorgaben der CD-Standards abweicht, was hier innerhalb gewisser Grenzen möglich ist.

Sehr wichtig ist die Spurbreite von 1,5 Mikrometer mittlerweile bei "80 Minuten" CD-Rs (bzw. CD-RWs), also den beschreibbaren CDs. Diese 80 Minuten Spieldauer entsprechen den etwa 700 Mbyte Kapazität einer "CD-R80", wie allgemein bekannt.

Zusammenfassend kann man sagen, dass bei im Spritzgussverfahren hergestellten CDs (vorgefertigte CDs) heute eine lineare Lesegeschwindigkeit von 1,2m/s mit entsprechenden Pitlängen üblich ist, zusammen mit einer Spurbreite von 1,6 Mikrometern. (Die 1,2m/s beziehen sich auf eine "einfache Lesegeschwindigkeit", wie sie beim Lesen einer Audio-CD üblich ist.) Bei Bedarf wird speziell die Spurbreite nach unten unterschritten in Richtung 1,5 Mikrometer, bzw. verwendet man den Wert 1,5 Mikrometer meistens konkret.

Eine lineare Geschwindigkeit von 1,3m/s ist eher selten anzutreffen, es handelt sich aber gedanklich um den Mittelwert der linearen Dichte einer CD. Abweichungen bezüglich der linearen Dichte einer nur lesbaren Compact Disc bzw. der mittleren Spurbreite in Richtung "obere Toleranz" werden in der Praxis, soweit mir bekannt, nicht benutzt, obwohl sie definiert sind. Bei hybriden Platten, z.B. einer DVD-CD, haben diese Abweichungen in Richtung "obere Toleranz" und darüber jedoch den nutzbaren Effekt, die Signalqualität der CD-Seite eines derartigen hybriden Speichermediums zu erhöhen, wie hier vorgeschlagen.

Es gibt jedoch eine relevante Anwendung, in der die höchste lineare Geschwindigkeit von 1,4m/s, entsprechend den maximal möglichen Pitlängen, bei einer CD sinnvoll eingesetzt werden. Es handelt sich um die Aufnahme von Musik auf eine CD-R, bei der längere Pitlängen auf dem Medium nachweislich zu einem geringeren Jitter der aufgenommenen Daten auf den CD-R-Medien führen. Ob bei der Wiedergabe einer CD-Audio ein geringer Medienjitter sich hörbar äussert, wird an der Anfälligkeit eines Reproduktors gegenüber Medienjitter liegen. Es ist klar, dass ein guter CD-Spieler gerade den Medienjitter eliminieren sollte, indem etwa ein DAC bei der Wiedergabe der Audiodaten eine unabhängige, präzise und von dem Lesevorgang der CD unabhängige Taktung erhält. Obwohl dies "leicht" ldingt, kann jedoch in der Tat Medienjitter zu Wiedergabejitter bei CD-Reproduktion führen, mit hörbaren Folgen.

Ob das von Yamaha eingeführte "Audio Master Quality Recording"-Verfahren daher zu einer Verbesserung der Audioreproduktion führt, wird folglich auch vom CD-Spieler abhängen. Dennoch kann dieses Verfahren sich in der Praxis positiv auswirken. Obwohl die vorliegende Erfindung nicht mit diesem Verfahren zusammenhängt oder inspiriert worden ist, besteht eine offensichtliche Ähnlichkeit darin, dass in beiden Fällen die Qualität der Wiedergabe, bzw, des Lesesignals, durch vergrößerte Pitstrukturen verbessert wird.

Generell sind die Toleranzen heutiger CD-Reproduktoren meistens wesentlich größer als die in den CD-Standards vorgegebenen Bereiche, eine Tatsache, die für vorliegende Erfindung nützlich ist.

So gibt es mittlerweile CD-Rs in 90 und sogar 99 Minuten, die speziell in ersterem Fall sehr kompatibel zu bisherigen Lesegeräten sind. Zwar kann es Schwierigkeiten bereiten, CD-Rs in Überlänge (>80 Minuten) mit vorhandenen CD-Writern zu schreiben, jedoch bereiten sie beim Lesen auf den meisten CD-Laufwerken, CD-Spielern etc. deswegen relativ wenig Probleme, da bereits im normalen CD-Standard Zeitcodes bzw. "Adressen" bis 90 Minuten definiert sind. Bei von TDK angebotenen "High Capacity Recording" Discs ist die Spurbreite einer derartigen CD-R lediglich 1,33µm, weit unter dem "offiziellen" Minimum von 1,5 Mikrometer. Die weite Einsetzbarkeit der Medien spricht für sich selbst.

Man kann CD-Medien mit mehr als 90 Minuten definieren, die jedoch in diesem Fall auch auf Lesegeräten Schwierigkeiten bereiten können, da Zeitcodes bzw. Adressen über 90 Minuten als "negativ" (bzw. Lead-In einer Compact Disc) interpretiert werden können.

Dies ist ein Problem bezüglich der Adressierung. Falls ein Film (auf einer VCD) oder eine CD-Audio abgespielt wird, dann funktioniert eine solche CD99 (oder CD-R99) meistens reibungslos im Durchlauf, obwohl man evtl. keine Tracks über Minute 90 mehr anspringen kann. Dies zeigt, dass es sich in der Tat in erster Linie um ein Adressierungsproblem handelt, jedoch Standardabweichungen gegenüber physikalischen CD-Spezifikationen wegen weiter Toleranzen der Abspielgeräte in der Regel kein großes Problem darstellen. Philips hat mittlerweile eine "High Capacity Recordable Disc" offiziell bis ca. 98 Minuten definiert. Die physikalischen Spezifikationen sind in diesem Fall konkret eine Spurbreite von 1,28µm, was gegenüber der Standardspurbreite zu einer um 25% erhöhten Datendichte bzw. -kapazität führt. Die lineare Geschwindigkeit liegt ebenfalls unterhalb des "erlaubten" minimalen Wertes von 1,2m/s, sie beträgt hier 1,13m/s.

Da die Bemühungen um CDs mit grösserer Kapazität als 80 Minuten Audio oder Mpeg-1 Video bereits einige Jahre zurückreichen, mögen auch andere vom CD-Standard abweichende Werte in der Praxis anzutreffen sein. Es geht dabei stets um eine Erhöhung der Datendichte. Jedoch sind diese CDs nicht standardkonform, das heißt ihre Funktion ist speziell als austauschbares Datenformat eingeschränkt.

Dennoch ist die Kompatibilität speziell von CDs mit ca. 90 Minuten Spieldauer erstaunlich hoch.

Die vorliegende Erfindung umfasst die Vergrösserung der Pitstrukturen einer CD-Schicht, wenn diese in einer hybriden Platte vorliegt, zusammen mit einem anderen Datenformat im gleichen Medium bei einer hybriden DVD-CD (DVDplus). Diese Vergrösserung ist insbesondere dann sinnvoll, wenn das CD-Substrat von der auszulesenden Oberfläche aus gesehen sich in weniger als 1,1mm Tiefe befindet und damit die laut CD-Standards festgelegte minimale CD-Substratdicke unterschreitet. Diese Verringerung ist im konkreten Anwendungsbeispiel deswegen wünschenswert, da die Gesamtdicke einer derartigen DVD-CD in Richtung 1,5mm verringert werden soll, bzw. im Idealfall die Gesamtdicke kleiner oder gleich 1,5mm sein soll.

Erfindungsgemäße Ausführungen gibt es bei zweiseitig auszulesenden Platten, nämlich einer zweiseitigen DVD-CD ("DVD-plus").

Es wird empfohlen, die Länge der Pitstrukturen über den sich bei einer linearen Geschwindigkeit von 1,3 m/s ergebenden Wert zu erhöhen.

Bei einer Geschwindigkeit von 1,2 m/s wird in der Literatur eine Pitlänge von 3T=0,833 Mikrometer bis 11T = 3,054 Mikrometer angegeben. (Vermutlich sind diese Werte nicht ganz exakt, werden hier aber aus der Literatur übernommen.)

Bei der linearen Lesegeschwindigkeit von 1,3 m/s ergeben sich die diese Werte, multipliziert mit einem Faktor von 1,3 /1,2, folglich 3T = 0,9024 Mikrometer, 11T = 3,3085 Mikrometer (Werte gerundet). Die entsprechenden Werte sind bei erfindungsgemäßen CD-Schichten daher stets größer als die sich bei einer linearen Geschwindigkeit von 1,3m/s ergebenden Längen von ca. 0,9024 Mikrometer bis 3,3085 Mikrometer.

Es spricht bei der Vergrößerung von Pits und Lands nichts dagegen, z. B. die laut CD-Standard maximal mögliche Größe der Pitstrukturen zu verwenden, also den Werten, die einer linearen Geschwindigkeit von 1,4m/s entsprechen. Diese liegen zwischen 3T = 0,972 Mikrometer und 11T = 3,564 Mikrometer.

Nachteilig bei dieser Vergrößerung ist die Tatsache, dass sich die Spieldauer einer CD-Audio auf ca. 63 Minuten verringern würde, sofern eine Standardspurbreite von 1,6 Mikrometer beibehalten wird. Es ist laut CD-Standard möglich, diese auf 1,5 Mikrometer zu verringern, wodurch sich diese Spieldauer auf ca. 67-68 Minuten erhöht. Wie oben begründet, können aber z.B. auch Spurbreiten von 1,4 Mikrometer, 1,33 Mikrometer, 1,27 Mikrometer oder evtl. sogar noch weniger verwendet werden. Der geringste angegebene Wert entspricht einer Verlängerung der Spieldauer von ca. 26%, während die Verminderung der Spieldauer bei den einer Geschwindigkeit von 1,4 m/s gegenüber den üblichen 1,2 m/s lediglich 17% beträgt.

Eine Verringerung eines CD-Substrats auf ca. 0,9mm von den in Standards (noch) erlaubten 1,1mm wird angestrebt. Falls ein CD-Substrat von 0,9mm mit einem DVD-Substrat von ca. 0,570mm kombiniert wird, lassen sich bei optimierten Klebeverfahren DVD-CD-Hybride in weniger als 1,5mm Dicke erreichen, wodurch sich eine standardkonforme DVD ergibt, die mit einer modifizierten CD-Seite kombiniert wird. Um dieses recht anspruchsvolle Ziel zu erreichen, kann auch hinsichtlich der verwendeten Pit- und Land-Längen der CD-Standard komplett verlassen werden. Es wird vermutet, dass dies sogar besonders vorteilhaft ist.

Wenn die Pit- und Landstrukturen um 25% vergrößert werden, ergibt sich einerseits eine lineare Lesegeschwindigkeit von 1,5 m/s, andererseits sind die entsprechenden Längen bei 3T und 11T (ungefähr) 1,041 Mikrometer, bei 11 T 3,818 Mikrometer.

Die Verringerung der Spieldauer um 25% kann durch eine gleichzeitig erfolgende Anpassung bzw. Verminderung der Spurbreite vollständig ausgeglichen werden, bzw. sogar überkompensiert werden.

Die Vergrößerung der Pitstrukturen führt zwar zu einen Verstoß gegen die in den CD-Standards vorgegebenen Empfehlungen, sie führen jedoch gerade bei dünneren CD-Substraten zu einer Erhöhung der Kompatibilität, ist also bei hybriden Platten offensichtlich sinnvoll, wenn die Gesamtdicke der Platte vermindert werden soll. Wegen den durchaus vorhandenen Toleranzen vorhandener CD-Spieler zu veränderten Pitlängen und Abspielgeschwindigkeiten führt diese Maßnahme im Allgemeinen nicht zu Abspielproblemen, im Gegensatz zur Verringerung der CD-Schichttiefe, bzw. einer verminderten Dicke eines CD-Substrats. Die vorliegende Erfindung versucht ausdrücklich, solche dünneren CD-Substrate praxistauglicher zu gestalten, indem die Leseeigenschaften verbessert werden, evtl. im Zusammenspiel mit weiteren Änderungen, wie das Verwenden eines Materials mit einem geringeren Brechungsindexes als das bei CDs übliche Polykarbonat. (Der Brechungsindex liegt bei CDs bei ca. 1,58, mit leichten Variationen.)

Man versucht zur Zeit erneut verstärkt, DVD-Formate wie DVD-Video und insbesondere DVD-Audio mit einer zu CD-Spielern rückwärtskompatiblen CD-Schicht zu kombinieren, wodurch der Praxisbezug der Erfindung offensichtlich ist, da es sich um eine Verbesserung vorhandener Ausführungen und Formate wie DVD-plus handelt.

Obwohl die Erfindung in ihren Ansprüchen sich auf eine DVD-plus in 1,7mm Höhe beziehen kann und zu einer Verbesserung des Lesesignals führen würde, ist sie besonders bei der Herstellung dünnerer CD-Substrate als 1,1mm hilfreich.

Eine DVD-CD, die z.B. Musik in unterschiedlichen Formaten und Auflösungen präsentiert, könnte prinzipiell durch zwei separate Platten ersetzt werden, also eine DVD und CD in getrennter Ausführung. Jedoch ist es nicht im Sinn der Musikindustrie bzw. Plattenfirmen, zu einem im wesentlichen gleichen oder nur leicht erhöhten Preis zwei physikalische Kopien der gleichen Aufnahme anzubieten. Dies ist der prinzipielle Vorteil jeder hybriden Platte, die Musik, Video, Software etc. in zwei oder mehr Formaten enthält. Es handelt sich stets um nur eine einzige physikalische Kopie, die aber gegenüber den einzelnen Formaten/Platten zu mehr Abspielgeräten kompatibel ist

Im Folgenden wird auf die Zeichnungen eingegangen, die hier hauptsächlich zur Veranschaulichung des bisher Gesagten dienen. Erfindungsgemäße Ausführungen werden an DVD-CD Kombinationsplatten demonstriert.
Fig. 1 zeigt eine konventionelle DVD-CD, bzw. "DVDplus"
Fig. 2 zeigt die Pit- und Landstrukturen einer konventionellen DVD-CD
Fig. 3 zeigt eine erfindungsgemäße DVD-CD, mit modifizierten Pitstrukturen
Fig. 4 zeigt die Pitsrukturen einer erfindungsgemäßen DVD-CD in schematischer Draufsicht und starker Vergrösserung

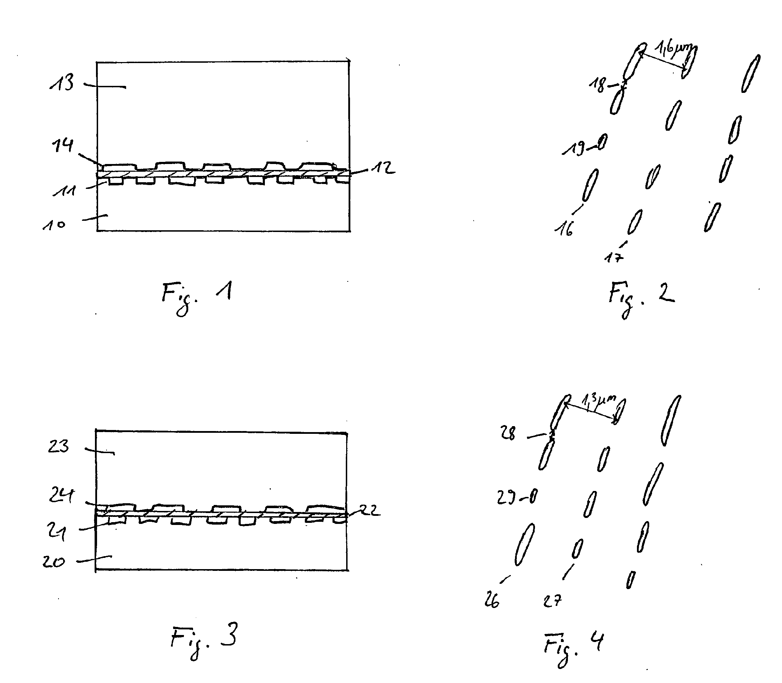

In Figur 1 wird eine konventionelle DVDplus in einer Höhe von beispielsweise 1,7mm vorgestellt.

Von der in der Zeichnung unteren Seite gesehen liegt eine DVD-Halbplatte 10 vor, die eine Datenschicht 11 enthält. Die Halbplatte 10 und Datenschicht 11 sollten dabei dem DVD-Standard entsprechen, bzw. innerhalb der physikalischen DVD-Spezifikationen liegen.

Eine Klebeschicht 12 trennt die DVD-und CD-Seite, diese Klebeschicht ist bei einer DVD-plus üblicherweise nicht transparent. Sie kann bis auf wenige Mikrometer ausgedünnt werden, bei zweiseitigen DVDs wäre diese Klebeschicht z.B. 55 Mikrometer dick.

Auf der zweiten Seite, bzw. die obere Seite in Figur 1, befindet sich auf dem transparenten Polykarbonat-Substrats 13 eine (metallisierte) Datenschicht 14. Diese entspricht hinsichtlich der Pitstruktur den für CD-Standards gegbenen Empfehlungen, und liegt selbst im Inneren der hybriden DVD-CD.

Es bleibt anzumerken, dass eine DVD-plus auch mit zwei DVD-Schichten hergestellt werden kann, obwohl es bisher nicht üblich ist.

In Figur 2 werden die Pitstrukturen einer CD-Schicht des innerhalb einer DVD-CD Hybridplatte in Vergrösserung und "von oben" dargestellt. Die Zeichnung ist schematisch und nicht maßstabsgetreu. Zwei Datenspuren 16 und 17 befinden sich in einem Abstand von 1,6 Mikrometern, wie bei CDs allgemein üblich.

Es werden zwei Minimum-Längen 3T von 0,833 Mikrometer, entsprechend einer linearen Lesegeschwindigkeit von 1,2 m/s, dargestellt, sowohl bei einem Land (18); als auch bei einem Pit (19).

Anmerkung: Obwohl eine CD bzw. DVD eine Datenspirale aufweist und streng genommen keine exakt parallelen Spuren aufweist, sieht man quasiparallele Spuren im Abstand von 1,6 Mikrometer zumindest in starker Vergrößerung.

Figur 3 beschreibt eine modifizierte DVD-CD gemäß vorliegender Erfindung. Es liegt ebenfalls ein DVD-Substrat 20 und eine DVD-Datenschicht 21 vor. Diese sollten wiederum hinsichtlich Pitstrukturen innerhalb gängiger physikalischer Spezifikationen liegen, wie sie für DVDs formuliert worden sind. Erfindungsgemäß wird die DVD-Substratdicke gegenüber den Standardspezifikationen leicht vermindert. Für einen optischen Ausgleich wegen der Verschlechterung des Lesesignals könnten auch bei der DVD die Pits und Lands evtl. leicht vergrössert werden. Die Toleranzen sind jedoch bei DVDs generell recht eng.

Eine Klebeschicht 22 sollte in Fig. 3 so dünn wie möglich hergestellt werden, bzw. können und sollten Dicken von ca. 40 bis 60 Mikrometer klar unterschritten werden, um zur Verminderung der Gesamtdicke einer DVD-CD Hybridplatte einen Beitrag zu leisten. Das CD-Substrat 23 ist in diesem Ausführungsbeispiel 0,9mm dick, die CD-Schicht 24 weist erfindungsgemäß modifizierte Pitstrukturen auf.

Figur 4 geht auf diese modifizierten Pitstrukturen ein. Es liegen wiederum zwei Beispiel-Datenspuren 26 und 27 vor, dargestellt in extremer Vergrößerung und in Draufsicht. Auffallend ist der geringere Spurabstand von in diesem Beispiel 1,3 Mikrometer, mit dem der durch die Vergrößerung der Pitstrukturen entstehende Verlust der linearen Bitdichte ausgeglichen wird. Beide Effekte heben sich in etwa auf, die Datenkapazität der "CD"-Schicht dieser Platte ist ungefähr so hoch wie bei einer Standard-CD.

Es liegen zwei Minimum-Bitlängen 3T vor, wiederum für ein Land (28) und ein Pit (29) dargestellt. Es wird von einer linearen Lesegeschwindigkeit von 1,5m/s ausgegangen, dies fährt gegenüber Figur 2 zu einer Verlängerung der Pitdimensionen von 25% und zu einem besseren Lesesignal, speziell bei auftretenden Aberrationseffekten. Die Länge 3T beträgt in diesem Falle, wie bereits weiter oben ausgeführt, ca. 1,041 Mikrometer, bzw. 0,833 Mikrometer * 1,25.

Vorliegende Erfindung, die stets hybride Datenträger mit zwei Datenschichten definiert, nie etwa eine einzelne CD, bezieht sich in der Regel auf nur-lesbare Platten, sie muss es aber nicht. Eine nur lesbare CD-Schicht mit Pits und Lands könnte beispielsweise mit einer beschreibbaren oder wiederbeschreibbaren DVD kombiniert werden. Es wäre sogar denkbar, eine beschreibbare oder wiederbeschreibbare CD-Schicht einzusetzen, wobei in diesem Falle nicht Pits und Lands gegenüber normalen CD-Werten verlängert werden, sondern optisch unterscheidbare Effekte wie "hell" und "dunkel" in beschreib- oder wiederbeschreibbaren Materialien.

Ein gegenwärtiges Anwendungsbeispiel der Erfindung ist eine nur-lesbare DVD-CD (DVDplus). Wie bekannt, können CDs und DVDs auch mit 8 cm Durchmesser hergestellt werden, nicht nur in 12 cm. Solchen und anderen Varianten wird in den Ansprüchen Rechnung getragen, die die Erfindung definieren.

In Zukunft wäre es beispielsweise auch denkbar, eine Schicht für blauen Laser mit einer CD-Schicht zu kombinieren. Beispielsweise ist die "Advanced Optical Disc" von Toshiba/NEC für ein 0,6mm-Substrat definiert worden, entsprechend den Verhältnissen bei einer DVD. Es liegt auf der Hand, dass die Kombination einer AOD- und CD-Schicht zu einer Platte führen kann, die dicker als 1,5mm ist, sofern nicht das CD-Teilsubstrat ausgedünnt wird. Wie bei einer DVDplus, gibt die vorliegende Beschreibung dazu eine Hilfestellung, indem die Signalqualität eines dünnen CD-Substrats verbessert werden soll.

Weitere Ausführungen und Anwendungsbeispiele gehen aus den Ansprüchen hervor.

Wie bereits ausgeführt, können weitere Maßnahmen eingesetzt werden, um beispielsweise die Fokusierung auf eine relativ naheliegende CD-Schicht für die Optik eines CD-Spielers zu erleichtern. In diesem Falle würde sinnvollerweise der Brechungsindex eines eingesetzten Plattenmaterials von dem bei einer CD üblichen Wert (ca. 1,58) vermindert werden. Umgekehrt kann beim Brechungsindex auch nach oben abgewichen werden, sofern eine "normale" sphärische Aberration erreicht werden soll. Jedoch wird vermutet, dass eine Verminderung des Brechungsindexes in der Regel vorzuziehen ist. Daher lautet die Empfehlung, vorliegende Erfindung in manchen Ausführungsbeispielen mit einem Brechungsindex in der Grössenordnung von 1,40 - 1,55 zu kombinieren, wobei dies aber noch in der Praxis getestet werden muss.

Falls allein die Verlängerung von Pits und Lands zu einer ausreichend kompatiblen DVDplus führt, so können gegenwärtige Materialien und Produktionsprozesse weitgehend unverändert beibehalten werden, während lediglich die im Spritzgussverfahren eingesetzten CD-Master oder -matrizen angepasst werden müssen, wobei, wie beschrieben, die Längen von Pits und Lands vergrössert wird.

Die CD-Schicht kann jedem CD-Format genügen, beziehungsweise können auf einer CD-Schicht auch mehrere CD-Formate miteinander kombiniert werden. Beispielsweise können auf Multisession-CDs die Formate CD-Audio und CD-ROM miteinander kombiniert werden. Dies ist heute auch allgemein üblich, beispielsweise auch, um auf Computern einen Kopierschutz gegen das Kopieren von Audio-CDs anzubieten, indem diese eine "CD-ROM" erkennen. Selbstverständlich ist dies kein "harter" Kopierschutz.

## Patentansprüche

1. Optischer Datenträger im Scheibenformat mit mindestens einer CD-Schicht mit optisch lesbaren CD-Datenstrukturen, deren Längen entsprechend der EFM-Modulation zwischen dem 3-fachen und dem 11-fachen einer Grundlänge T betragen, wobei
- das 3-fache der Grundlänge T (3T-Wert) mindestens 0,9 Mikrometer beträgt,
- das 11-fache der Grundlänge (11T-Wert) mindestens 3,3 Mikrometer beträgt,
- die CD-Schicht von derjenigen Oberfläche des Datenträgers, durch die hindurch die CD-Schicht ausgelesen wird, sich in einer Schichttiefe von weniger als 1,1 mm befindet,
- der Datenträger genan eine weitere Datenschicht, nämlich eine DVD-Schicht mit Pitstrukturen gemäß den für Datenträger unit einer einziger DVD-Schicht geltenden physikalischen Spezifikationen des Standards ECMA-267 bzw. ECMA-268, aufweist,
- die CD-Schicht und die DVD-Schicht von entgegengesetzten Seiten des Datenträgers ausgelesen werden, und
- der Datenträger ein DVD-Substrat mit einer DVD-Substratdicke von weniger als 0,570 mm aufweist.

2. Datenträger nach Anspruch 1, bei dem die DVD-Substratdicke mindestens 0,55 mm beträgt.

3. Datenträger nach Anspruch 1, bei dem die DVD-Substratdicke 0,55 mm beträgt.

4. Datenträger nach einem der Ansprüche 1 bis 3, **dadurch gekennzeichnet, dass** der Brechungsindex eines für ein CD-Substrat verwendeten transparenten Materials weniger als 1,58 beträgt.

5. Datenträger nach Anspruch 4, bei dem der Brechungsindex des für das CD-Substrat verwendeten transparenten Materials weniger als 1,55 beträgt.

6. Datenträger nach Anspruch 4, bei dem der Brechungsindex des für das CD-Substrat verwendeten transparenten Materials im Bereich von 1,40 bis 1,55 liegt.

7. Datenträger nach einem der Ansprüche 4 bis 6, bei dem das für das CD-Substrat verwendete transparente Material einen niedrigeren Brechungsindex als Polykarbonat aufweist.

8. Datenträger nach einem der Ansprüche 1 bis 7, **dadurch gekennzeichnet, dass** das 3-fache der Grundlänge T (3T-Wert) mindestens 0,98 Mikrometer beträgt und das 11-fache der Grundlänge (11T-Wert) mindestens 3,57 Mikrometer beträgt.

9. Datenträger nach einem der Ansprüche 1 bis 8, **dadurch gekennzeichnet, dass** das 3-fache der Grundlänge T (3T-Wert) mindestens 1,0 Mikrometer beträgt und das 11-fache der Grundlänge (11T-Wert) mindestens 3,67 Mirkometer beträgt.

10. Datenträger nach einem der Ansprüche 1 bis 9, **dadurch gekennzeichnet, dass** ein Spurabstand der CD-Datenstrukturen weniger als 1,6 Mikrometer, vorzugsweise weniger als 1,5 Mikrometer, beträgt.

11. Datenträger nach einem der Ansprüche 1 bis 10, **dadurch gekennzeichnet, dass** die CD-Schicht mindestens teilweise, und vorzugsweise gänzlich, nur-lesbar ist.

12. Datenträger nach einem der Ansprüche 1 bis 11, **dadurch gekennzeichnet, dass** die Gesamtdicke des Datenträgers höchstens 1,7 mm, vorzugsweise höchstens 1,6 mm beträgt.

13. Datenträger nach einem der Ansprüche 1 bis 12, **dadurch gekennzeichnet, dass** die Gesamtdicke des Datenträgers höchstens 1,5 mm beträgt.

14. Datenträger nach einem der Ansprüche 1 bis 13, **dadurch gekennzeichnet, dass** der Datenträger einen Durchmesser von weniger als 12 cm aufweist, vorzugsweise einen Durchmesser von ungefähr 8 cm.

15. Datenträger nach einem der Ansprüche 1 bis 14, **dadurch gekennzeichnet, dass** sich die CD-Schicht von derjenigen Oberfläche des Datenträgers, durch die hindurch die CD-Schicht ausgelesen wird, in einer Schichttiefe von weniger als 1,05 mm, vorzugsweise weniger als 1,0 mm, befindet.

16. Datenträger nach einem der Ansprüche 1 bis 15, **dadurch gekennzeichnet, dass** sich die CD-Schicht von derjenigen Oberfläche des Datenträgers, durch die hindurch die CD-Schicht ausgelesen wird, in einer Schichttiefe von ca. 0,9 mm befindet.

17. Datenträger nach einem der Ansprüche 1 bis 16, bei dem der Brechungsindex eines für ein weiteres Substrat verwendeten transparenten Materials weniger als 1,58, vorzugsweise weniger als 1,55, beträgt.

18. Datenträger nach einem der Ansprüche 1 bis 17, bei dem der Brechungsindex eines für ein weiteres Substrat verwendeten transparenten Materials im Bereich von 1,40 bis 1,55 liegt.

19. Datenträger nach einem der Ansprüche 1 bis 18, der mindestens zwei Substrate mit unterschiedlichen Berechungsindizes aufweist.

20. Datenträger nach einem der Ansprüche 1 bis 19, **dadurch gekennzeichnet, dass** die lesbaren Strukturen der CD-Schicht verbreitert sind.

21. Datenträger nach einem der Ansprüche 1 bis 20, **dadurch gekennzeichnet, dass** die lesbaren Strukturen der CD-Schicht eine Breite von mehr als 500 nm, vorzugsweise eine Breite von mehr als 600 nm, aufweisen.

## Claims

1. Optical data carrier in disc format having at least one CD layer having optically readable CD data structures whose lengths, to suit EFM modulation, are between 3 times and 11 times a basic length T, wherein
- 3 times the basic length T (the 3T value) is at least 0.9 micrometres,
- 11 times the basic length (the 11T value) is at least 3.3 micrometres,
- from that surface of the data carrier through which the CD layer is read, the CD layer is situated at a depth of less than 1.1 mm,
- the data carrier has exactly one further data layer, namely a DVD layer having pit structures according to the physical specifications, which are applicable for data carriers having a single DVD layer, of standards ECMA-267 and ECMA-268, respectively,
- the CD layer and the DVD layer are read from opposite sides of the data carrier, and
- the data carrier has a DVD substrate of a DVD substrate thickness of less than 0.570 mm.

2. Data carrier according to claim 1, in which the DVD substrate thickness is at least 0.55 mm.

3. Data carrier according to claim 1, in which the DVD substrate thickness is 0.55 mm.

4. Data carrier according to any one of claims 1 to 3, **characterised in that** the refractive index of a transparent material which is used for a CD substrate is less than 1.58.

5. Data carrier according to claim 4, in which the refractive index of the transparent material which is used for the CD substrate is less than 1.55.

6. Data carrier according to claim 4, in which the refractive index of the transparent material which is used for the CD substrate is in the range from 1.40 to 1.55.

7. Data carrier according to any one of claims 4 to 6, in which the transparent material which is used for the CD substrate has a lower refractive index than polycarbonate.

8. Data carrier according to any one of claims 1 to 7, **characterised in that** 3 times the basic length T (the 3T value) is at least 0.98 micrometres and 11 times the basic length (the 11T value) is at least 3.57 micrometres.

9. Data carrier according to any one of claims 1 to 8, **characterised in that** 3 times the basic length T (the 3T value) is at least 1,0 micrometre and 11 times the basic length (the 11T value) is at least 3.67 micrometres.

10. Data carrier according to any one of claims 1 to 9, **characterised in that** a track pitch of the CD data structures is less than 1.6 micrometres and preferably less than 1.5 micrometres.

11. Data carrier according to any one of claims 1 to 10, **characterised in that** the CD layer is at least partly, and preferably entirely, read-only.

12. Data carrier according to any one of claims 1 to 11, **characterised in that** the total thickness of the data carrier is at most 1.7 mm and preferably at most 1.6 mm.

13. Data carrier according to any one of claims 1 to 12, **characterised in that** the total thickness of the data carrier is at most 1.5 mm.

14. Data carrier according to any one of claims 1 to 13, **characterised in that** the data carrier has a diameter of less than 12 cm and preferably a diameter of approximately 8 cm.

15. Data carrier according to any one of claims 1 to 14, **characterised in that,** from that surface of the data carrier through which the CD layer is read, the CD layer is situated at a depth of less than 1.05 mm, and preferably of less than 1.0 mm.

16. Data carrier according to any one of claims 1 to 15, **characterised in that,** from that surface of the data carrier through which the CD layer is read, the CD layer is situated at a depth of approx. 0.9 mm.

17. Data carrier according to any one of claims 1 to 16, in which the refractive index of a transparent material which is used for a further substrate is less than 1.58 and preferably less than 1.55.

18. Data carrier according to any one of claims 1 to 17, in which the refractive index of a transparent material which is used for a further substrate is in the range from 1.40 to 1.55.

19. Data carrier according to any one of claims 1 to 18, which has at least two substrates having different refractive indexes.

20. Data carrier according to any one of claims 1 to 19, **characterised in that** the readable structures of the CD layer are widened.

21. Data carrier according to any one of claims 1 to 20, **characterised in that** the readable structures of the CD layer are of a width of more than 500 nm and preferably of a width of more than 600 nm.

## Revendications

1. Support de données optique au format disque, avec au moins une couche CD avec des structures de données CD lisibles optiquement dont les longueurs, en fonction de la modulation EFM (8 à 14), ont une valeur comprise entre 3 fois et 11 fois une longueur de base T, dans lequel
- 3 fois la longueur de base T (valeur 3T) est égal à 0,9 micromètres au moins,
- 11 fois la longueur de base (valeur 11T) est égal à 3,3 micromètres au moins,
- la couche CD de la surface du support de données à travers laquelle la couche CD est lue se trouve à une profondeur de couche inférieure à 1,1 mm,
- le support de données présente exactement une autre couche de données, à savoir une couche DVD comportant des structures en puits conformes aux spécifications physiques de la norme ECMA-267 ou ECMA-268 applicables à des supports de données à une seule couche DVD,
- la couche CD et la couche DVD sont lues à partir de faces opposées du support de données, et
- le support de données présente un substrat DVD ayant une épaisseur de substrat DVD inférieure à 0,570 mm.

2. Support de données selon la revendication 1, dans lequel l'épaisseur du substrat DVD est d'au moins 0,55 mm.

3. Support de données selon la revendication 1, dans lequel l'épaisseur du substrat DVD est de 0,55 mm.

4. Support de données selon l'une des revendications 1 à 3, **caractérisé en ce que** l'indice de réfraction d'un matériau transparent utilisé pour un substrat CD est inférieur à 1,58.

5. Support de données selon la revendication 4, dans lequel l'indice de réfraction du matériau transparent utilisé pour le substrat CD est inférieur à 1,55.

6. Support de données selon la revendication 4, dans lequel l'indice de réfraction du matériau transparent utilisé pour le substrat CD se situe dans la plage de 1,40 à 1,55.

7. Support de données selon l'une des revendications 4 à 6, dans lequel le matériau transparent utilisé pour le substrat CD présente un indice de réfraction inférieur à celui du polycarbonate.

8. Support de données selon l'une des revendications 1 à 7, **caractérisé en ce que** 3 fois la longueur de base T (valeur 3T) est égal à 0,98 micromètres au moins et 11 fois la longueur de base (valeur 11T) est égal à 3,57 micromètres au moins.

9. Support de données selon l'une des revendications 1 à 8, **caractérisé en ce que** 3 fois la longueur de base T (valeur 3T) est égal à 1,0 micromètres au moins et 11 fois la longueur de base (valeur 11T) est égal à 3,67 micromètres au moins.

10. Support de données selon l'une des revendications 1 à 9, **caractérisé en ce qu'**une distance entre les pistes des structures de données CD est inférieure à 1,6 micromètres, de préférence inférieure à 1,5 micromètres.

11. Support de données selon l'une des revendications 1 à 10, **caractérisé en ce que** la couche CD est au moins en partie et de préférence en totalité à lecture seule.

12. Support de données selon l'une des revendications 1 à 11, **caractérisé en ce que** l'épaisseur totale du support de données est de 1,7 mm maximum, de préférence de 1,6 mm maximum.

13. Support de données selon l'une des revendications 1 à 12, **caractérisé en ce que** l'épaisseur totale du support de données est de 1,5 mm maximum.

14. Support de données selon l'une des revendications 1 à 13, **caractérisé en ce que** le support de données présente un diamètre inférieur à 12 cm, de préférence un diamètre de 8 cm environ.

15. Support de données selon l'une des revendications 1 à 14, **caractérisé en ce que** la couche CD de la surface du support de données à travers laquelle la couche CD est lue se trouve à une profondeur de couche inférieure à 1,05 mm, de préférence inférieure à 1,0 mm.

16. Support de données selon l'une des revendications 1 à 15, **caractérisé en ce que** la couche CD de la surface du support de données à travers laquelle la couche CD est lue se trouve à une profondeur de couche de 0,9 mm environ.

17. Support de données selon l'une des revendications 1 à 16, dans lequel l'indice de réfraction d'un matériau transparent utilisé pour un autre substrat est inférieur à 1,58, de préférence inférieur à 1,55.

18. Support de données selon l'une des revendications 1 à 17, dans lequel l'indice de réfraction d'un matériau transparent utilisé pour un autre substrat se situe dans la plage de 1,40 à 1,55.

19. Support de données selon l'une des revendications 1 à 18, qui présente au moins deux substrats ayant des indices de réfraction différents.

20. Support de données selon l'une des revendications 1 à 19, **caractérisé en ce que** les structures lisibles de la couche CD sont élargies.

21. Support de données selon l'une des revendications 1 à 20, **caractérisé en ce que** les structures lisibles de la couche CD présentent une largeur supérieure à 500 nm, de préférence une largeur supérieure à 600 nm.
